# EUROPEAN PATENT SPECIFICATION

(11) **EP 1 839 319 B1**
(45) Date of publication and mention of the grant of the patent: **17.10.2012**
(21) Application number: 05746861.3
(22) Date of filing: 02.06.2005
(51) Int. Cl.: H01B 13/14, H05B 6/10, B29C 35/10

(54) **ARRANGEMENT AND METHOD FOR HEATING AN ELECTRICAL CONDUCTOR**
ANORDNUNG UND VERFAHREN ZUM ERHITZEN EINES ELEKTRISCHEN LEITERS
AGENCEMENT ET PROCEDE POUR CHAUFFER UN CONDUCTEUR ELECTRIQUE

(30) Priority: 10.01.2005 FI 20055014
(43) Date of publication of application: 03.10.2007
(73) Proprietor: Maillefer S.A., 1024 Ecublens (CH)
(72) Inventor: HUOTARI, Pekka, FI-79140 Kotalahti (FI)
(74) Representative: Valkeiskangas, Tapio Lassi Paavali
(86) International application number: PCT/FI2005/050190
(87) International publication number: WO 2006/072650

(56) References cited:
- JP-A- 04 014 793
- JP-A- 53 040 883
- JP-A- 53 056 275
- JP-A- 57 205 916
- JP-A- 58 040 709
- US-A1- 2004 234 640

## Description

### FIELD OF THE INVENTION

The present invention relates to an arrangement according to the preamble of claim 1 and particularly to an arrangement for inductively heating an electrical conductor after the extrusion head in a process of manufacturing electrical cables having a cross-linkable insulation layer surrounding the electrical conductor. Additionally, the present invention relates to a method according to the preamble of claim 18 and particularly to a method for inductively heating an electrical conductor after the extrusion head in a process of manufacturing electrical cables having insulation layers surrounding the electrical conductor.

### BACKGROUND OF THE INVENTION

Different means are known to enhance the production speed of electrical cables. The production speed is significantly dependent on how efficiently the Insulation layer(s) of the extruded cable can be heated to the temperature necessary for the crosslinking reaction. The main limiting factor of the heating is the low heat conduction rate inside the insulation. Therefore different arrangements have been used to speed up the heating rate of the insulation layer. These arrangements comprise pneheaters for heating the electrical conductor to a temperature above the ambient temperature prior to entering the extrusion head of the production line for heating the insulation layer also from the inside. However, this preheating is limited because of, for instance, copper oxidation, conductor tape deformation and moisture-block material degradation. Also radiant heat sources have been used, but the maximum admissible temperature of the outer surface of the extruded cable limits the utilisation of these radiant heat sources. Furthermore, Inductive post-heaters are used for this heating purpose after the extrusion of the insulation layer of the cable.

### PRIOR ART

Known arrangements for using inductive post-heating comprise inductively heating the extrusion tip and the die in order to promote crosslinking of the extruded insulation layer. Also is known to inductively heat the electrical conductor of a cable by a compact inductive heater located downstream of the extrusion head.

As examples of the prior art US-A-2004/0 234 640 and JP-A-04 014 793 can be mentioned.

In these prior art arrangements the post-heating is provided by an add-on equipment in the extrusion line of an insulation layer of a cable. Therefore these known equipment are separate compact devices that may be added to a extrusion line.

One of the disadvantages associated with the prior art inductive heating arrangements is that at production changes, additional equipment, such as X-ray measuring device, has to be removed to gain access to the inductive heating device for maintenance, dimensional change purposes or other process needs related to the inductive heating device.

Another disadvantage associated with the prior art is having both the coil and the protective field guiding elements (typically ferrites) in the same construction. This makes individual coils heavy, expensive and difficult to clean and maintain.

### BRIEF DESCRIPTION [DISCLOSURE] OF THE INVENTION

It is thus an object of the present invention to provide an arrangement and method for overcoming the above disadvantages. The objects of the invention are achieved by an arrangement according to claim 1.

Additionally, objects of the invention are achieved by a method according to claim 18.

Thus the arrangement of the present invention also protects splice-box and other external parts of the splice box from heating. Other external parts may be any parts outside the splice-box.

The preferred embodiments of the invention are disclosed In the dependent claims.

The invention is based on the idea of providing an arrangement and a method for inductively heating the electrical conductor of an electrical cable after the extrusion step such as to provide a modular approach for the inductive heating of the electrical conductor of an electrical cable. This simple construction for the inductive post-heater comprises induction means, preferably a coil, mounted downstream of the extrusion head for generating a magnetic field and guide means, preferably ferrite cores, located in the splice box to prevent inductive heating of the splice-box itself. Therefore the solution of the present invention comprises distinctive induction means mounted around the electrical cable and distinctive guide means mounted in a splice box around the induction means. This arrangement allows for easy changing of the coil during production stops when the splice-box is open.

An advantage of the arrangement and method of the invention is the modular approach for the post-heating of the electrical conductor after the extrusion of the insulating layer, which provides a simple construction with improved ergonomy for the heater and easier maintenance of the heater, as well as an efficient method for post-heating the electrical conductor.

### BRIEF DESCRIPTION OF THE DRAWINGS

In the following the invention will be described in greater detail by means of preferred embodiments with reference to the accompanying drawings, in which
Figure 1 shows schematically one embodiment of the present invention in operating state.
Figure 2 shows the embodiment of Figure 1 when the splice box is opened.
Figure 3 shows schematically another embodiment of the invention in operating state.
Figure 4 shows the embodiment of Figure 3 when the splice box is opened.
Figure 5 shows the embodiment of Figure 3 during conductor joint.

### DETAILED DESCRIPTION OF THE INVENTION

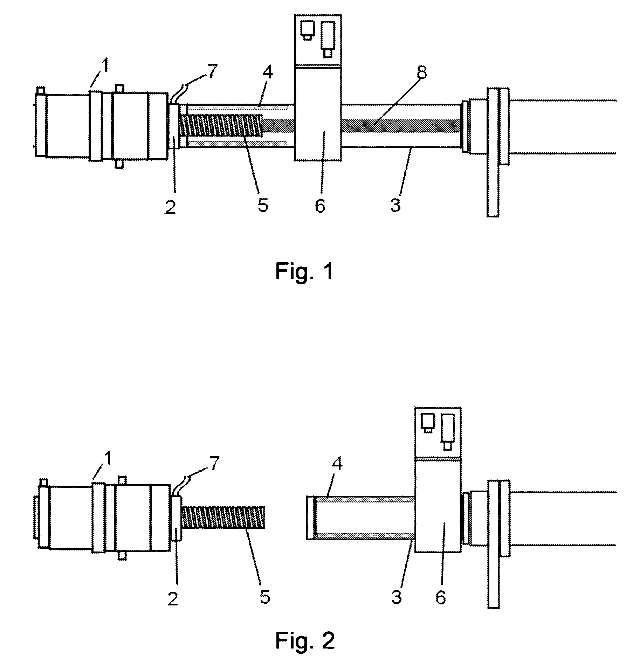

Figure 1 is a schematic view of one embodiment of the present invention when the splice box is closed as during production. In Figure 1 it is shown an extrusion head 1 of a production line for an electrical cable 8 comprising an electrical conductor and one to three layers including an insulation layer surrounding the electrical conductor. In production of electrical cables, layers are extruded on an electrical conductor, which may be copper, aluminum or any other metal suitable for the purpose. After this extrusion, the layers have to be crosslinked in order to provide the desired properties for said insulation layer. For the crosslinking reaction the layers have to be heated to a predetermined temperature. In the present invention, the heating of the layers is at least partly accomplished by inductively heating the electrical conductor.

As shown in Figure 1, the arrangement of the present invention comprises coil 5 as induction means for generating a magnetic field. The coil 5 is mounted on the extrusion head 1 of the production line downstream of the extrusion head 1. The mounting of the coil 5 to the extrusion head 1 is performed with a support, which in this embodiment is a flange 2, such that the coil 5 is mounted on the flange 2 and the flange 2 is connected to the extrusion head 1. The support may also be any other suitable construction for supporting the coil 5. The flange 2 is further provided with electrical connections 7 for operating the induction means, in this case the coil 5. Instead of a coil 5 also other induction means may be employed for heating the electrical conductor of the electrical cable 8. Also the coil may be possibly connected directly to the extrusion head, in which case also the electrical connections 7 may be connected directly to the coil 5.

The coil 5 is arranged such that it surrounds the electrical cable 8 as the cable 8 comes from the extrusion head 1. Therefore the magnetic field generated by the coil 5 induces a dissipative current to the electrical conductor of the electrical cable 8 for heating the electrical conductor. Heated electrical conductor in turn heats the insulation layer to a temperature necessary for the crosslinking reaction.

The induction means, the coil 5, form the first distinctive part of the arrangement for heating the electrical conductor. The first distinctive part may, as described above, also comprise a support, the flange 2, for supporting the induction means and for mounting the induction means to the extrusion head 1, and electrical connections 7 for operating the induction means.

The present arrangement for heating the electrical conductor comprises also a second distinctive part. This second distinctive part comprises guide means provided in a splice box 3 for directing the magnetic field created with the induction means in order to prevent heating of the splice-box 3 itself. In this particular embodiment shown in Figure 1, the guide means are ferrite cores 4 arranged in the splice box 3 around the induction means, but any other suitable guide means may be employed to accomplish the same purpose. The ferrite cores 4 or other guide means may be positioned in various ways to provide the function of directing magnetic field towards the electrical conductor.

In the present invention the ferrite cores 4 are mounted in splice box 3 of the production line. The splice box 3 is arranged over the coil 5 such that it surrounds the coil 5. As shown in Figure 1, in this embodiment of the invention the splice box 3 is removably connected to the flange 2, but when there is no flange 2 or any other support for the coil 5 the slice box 3 may be possible to connect directly to the extrusion head 1. The ferrite cores 4 are preferable integrated to the internal surfaces of the splice box 3. Various techniques and means may be used to mount or integrate the ferrite cores 4 to the splice box 3. The purpose for using the ferrite cores 3 is to avoid inductive heating of the other parts of the production line, such as the splice box 3 or steel tube enclosing the electrical cable 8.

The complete inductive heating arrangement is formed from the two above mentioned distinctive parts arranged downstream of the extrusion head and it is operable when the splice box 3 is connected to the extrusion head 1. In the case of Figure 1 the first distinctive part is connected to the extrusion head 1 and comprises a support flange 2 with an inductive coil 5 as induction means surrounding the electrical cable 8 and electrical connections 7 for operating the induction means 5, and the second distinctive part comprises ferrite cores 4 as guide means provided in a splice box 3 and surrounding the inductive coil 5 for directing the magnetic field created with the coil 5. In this case the coil 5 mounted to the flange 2 extends inside the splice box 3 in the direction of the electrical cable 8 surrounding the cable 8, and the ferrite cores 4 provided in the splice box 3 surround the coil 5.

In the invention the two distinctive parts of the inductive heating arrangement are provided inside a splice box 3, which enables to change the induction means, the coil, easily since the splice box may be opened. Therefore there is no longer need to remove additional equipments, such as X-ray devices, from the production line for disassembly of the extrusion head and/or the post-heater.

Figure 2 shows the embodiment of the Figure 1 when the splice box 3 is opened for changing the coil after the production line is shut-down. In that case an X-ray device 6 is provided in the splice box 3 between the respective ends of the splice box 3, as shown in Figure 2. When the splice box 3 is opened it is moved way from the extrusion head 1 so that the coil 5 is exposed. Then the coil 5 may be changed or the extrusion head 1 may be dissembled for maintenance without removing the X-ray device 6. This way also a conductor joint may be done without removing the X-ray device 6 or the coil 5.

Mentioned X-ray measuring device 6 may be provided as part of the splice box 3 or as an extension of the splice box 3, as is shown in Figure 1. Also any other additional device may be provided instead of the X-ray measuring device 6 as part of the splice box 3 or as an extension of the splice box 3.

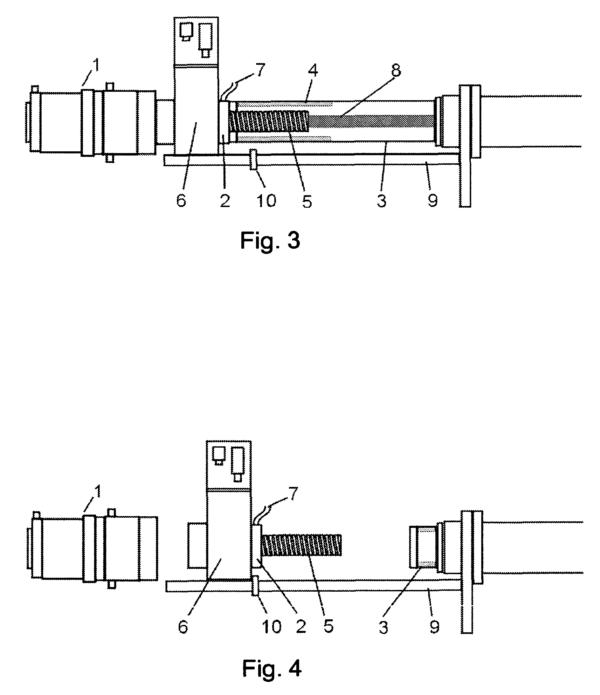

Figures 3, 4 and 5 show another embodiment of the present invention. In this embodiment the X-ray device 6 is arranged directly after the extrusion head 1 and the coil 5 is provided after the X-ray device 6, as shown in Figure 3. Guiding means, ferrite cores 5, are provided in the splice box 3, as in the embodiment of Figures 1 and 2. X-ray device 6 is removably connected to the downstream side of the extrusion head 1 and the coil 5 is connected to the X-ray device 6 using flange 2 or some other suitable means. Flange 2 is provided with electrical connections 7. Coil 5 surrounds the cable 8 for heating the conductor and the splice box 3 is arranged around the coil 5, when the splice box 3 is closed. With this arrangement the X-ray device can measure cable 8 dimensions right after the extrusion head 1 and for instance vibrations do not affect the readings.

This embodiment of Figure 3 comprises also support means 9 for supporting the X-ray device 6 together with the coil 5. In this Figure 3 the post-heater assembly is shown in operating state. These support means 9 are arranged such that X-ray device 6 and the coil 5 may be moved along the support means 9 downwards from the extrusion head 1. In a preferred embodiment these support means 9 are guiding bars for guiding the X-ray device and the coil 5 when the splice box 3 is opened. These support means 9 may further comprise a stopper 10 for limiting the movement of the X-ray device 6 along the support means 9. This way the X-ray device 6 may be moved a predetermined distance, determined by the stopper, along the support means 9. Stopper 10 may be any means for limiting the moving of the X-ray device 6. Support means 9 may also be arranged without any stopper 10.

Figure 4 shows the embodiment of Figure 3 during coil change and/or during extrusion head disassembly. In this situation the X-ray device 6 is moved downwards from the extrusion head 1 a distance determined by the stopper 10 and the splice box 3 is fully or at least partly opened. Thus, the X-ray device 6 is disconnected from the extrusion head 1 and the extrusion head 1 may be disassembled and simultaneously the coil 5 may be changed by disconnecting it from the X-ray device 6.

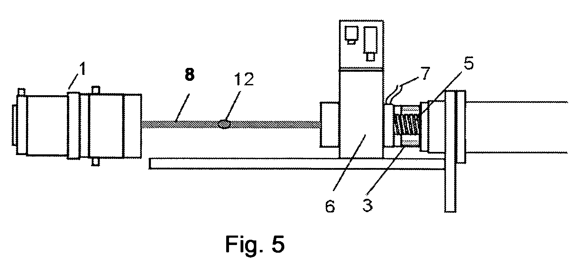

Figure 5 shows the embodiment of Figure 3 during conductor joint and/or during extrusion head disassembly. In this situation the X-ray device 6 is disconnected from the extrusion head 1 and the splice box 3 is opened. The X-ray device 6 and the coil 5 may be moved along the support means 9 together with the splice box 3 when the splice box 3 is opened. When the splice box 3 is opened and the X-ray device 6 moved with the coil 5 downwards from the extrusion head 1, the cable 8 may be accessed for making a joint 12 or the extrusion head 1 may be disassembled, as shown in Figure 5.

The modular approach of the arrangement of the present invention for heating electrical conductor downstream of an extrusion head is constructed so as that the induction means for generating a magnetic field and the guide means for guiding the magnetic field form two distinctive parts of the post-heater. The above construction allows the utilization of the splice box for heating the conductor downstream of the extrusion head. In that the case the coil and the ferrite cores do not form an integral part so that more freedom is created for maintenance and changes of the post-heater.

The present invention relates also to a method for heating an electrical conductor downstream of an extrusion head 1 in production line of electrical cables. In the method, a single insulation layer or several layers together are extruded in an extrusion head on the electrical conductor to produce an electrical cable. After the extrusion step the insulation layer needs to be heated to a predetermined temperature for crosslinking reaction to occur in the insulation layer. This heating is accomplished at least partly by creating a magnetic field by induction means mounted downstream of the extrusion head. In a preferred embodiment the magnetic filed is created by a coil arranged around the electrical cable. The induction means are operated by electrical connections such that the induction means induce a dissipative current to the electrical conductor. This current heats the electrical conductor.

Furthermore, the magnetic field created with the induction means is directed by guide means provided in a splice box in order to prevent heating of the splice-box itself. In the preferred embodiment, ferrite cores are used as guide means to direct the magnetic field and to avoid inductive heating of other parts of the production line. The method simplifies the post-heating of the electrical conductor of the electrical cable so as to provide more efficient crosslinking of the insulation layer and more efficient production of electrical cable.

The properties of the produced cable 8 may be measuring with an X-ray device 6 provided downstream of the induction means 5 and arranged in the splice box 3. Alternatively the properties of the cable 8 may be measured with an X-ray device 6 provided upstream of the induction means 5 and connected to the extrusion head 1.

## Claims

1. An arrangement for inductively heating an electrical conductor after the extrusion head in a process of manufacturing electrical cables (8) having insulation layer on the electrical conductor, the arrangement comprising a splice box, induction means (5) for generating a magnetic field and heating the conductor and guide means for directing the magnetic field created with the induction means, **characterized in that** the induction means (5) form a first distinctive part and the guide means (4) are provided to the splice box to form a second distinctive part such that when the splice box (3) is closed the guide means (4) surround the induction means (5) and when the splice box (3) is opened the induction means (5) are exposed.

2. An arrangement according to claim 1, **characterized in that** induction means (5) is a coil arranged around the electrical cable (8).

3. An arrangement according to claim 1 or 2, **characterized in that** first distinctive part further comprises a support (2) for supporting the induction means (5).

4. An arrangement according to any preceding claim 1 - 3, **characterized in that** first distinctive part further comprises electrical connections (7) for operating the induction means (5).

5. An arrangement according to any preceding claim 1 - 4, **characterized in that** guide means (4) are ferrite cores provided in the splice box (3) and surrounding the induction means (5) for guiding magnetic field created by the induction means (5) to protect the splice-box from heating.

6. An arrangement according to any preceding claim 1 - 5, **characterized in that** support (2) is a flange connected to the extrusion head (1).

7. An arrangement according to any preceding claim 1, **characterized in that** first distinctive part is connected to the extrusion head (1) and comprises a support flange (2) with an inductive coil as induction means (5) surrounding the electrical cable (8) and electrical connections (7) for operating the induction means (5), and that second distinctive part comprises ferrite cores as guide means (4) surrounding the inductive coil and provided in a splice box for directing the magnetic field created with the induction means (5) to protect the splice-box from heating.

8. An arrangement according to any preceding claim 1 - 7, **characterized in that** a X-ray measuring device (6) is part of the splice box (3).

9. An arrangement according to claim 8, **characterized in that** that the X-ray measuring device (6) is arranged downstream of the induction means (5).

10. An arrangement according to claims 8 or 9, **characterized in that** the X-ray measuring device (6) is arranged between the respective ends of the splice box (3).

11. An arrangement according to any preceding claim 1 - 5, **characterized in that** the X-ray measuring device (6) is arranged upstream of the induction means (5).

12. An arrangement according to claim 11, **characterized in that** the X-ray measuring device (6) is revomably connected to the extrusion head (1).

13. An arrangement according to claims 11 or 12, **characterized in that** the support (2) is a flange connected to the downstream side of the X-ray device (6).

14. An arrangement according to any preceding claim 10 - 13, **characterized in that** the arrangement further comprises support means (9) for moving away from the extrusion head (1) and supporting the X-ray device (6) and the induction means (5) when splice box (3) is opened.

15. An arrangement according to claim 14, **characterized in that** the support means (9) comprises a stopper (10) for limiting the movement of the X-ray device (6) and induction means (5) when splice box (3) is opened.

16. An arrangement according to claim 14 or 15, **characterized in that** the support means (9) are guiding bars.

17. An arrangement according to any preceding claim 4 - 16, **characterized in that** connections (7) are provided in the support (2).

18. Method for inductively heating an electrical conductor after the extrusion head (1) in a process of manufacturing electrical cables (8) having insulation layer surrounding the electrical conductor, the method comprising steps of:
- extruding an insulation layer through an extrusion head on an electrical conductor in order to produce an electrical cable (8); and
- creating a magnetic field by induction means (5), **characterized in that** the method further comprises a step of:
- directing the magnetic field created with the induction means by guide means (4) provided in a splice box (3) in order to protect external parts from heating such that when the splice box (3) is closed the guide means surround the induction means (5).

19. A method according to claim 18, **characterized by** creating the magnetic filed by a coil arranged around the electrical cable (8).

20. A method according to claim 18 or 19, **characterized by** operating the induction means by electrical connections.

21. A method according to any preceding claim 18 - 20, **characterized by** using ferrite cores provided in the splice box and surrounding the induction means for guiding the magnetic field created by the induction means (5) to protect external parts from heating.

22. A method according to any preceding claim 18 - 20, **characterized by** measuring the properties of the cable (8) with a X-ray device (6) provided downstream of the induction means (5) and arranged in the splice box (3).

23. A method according to any preceding claim 18 - 20, **characterized by** measuring the properties of the cable (8) with a X-ray device (6) provided upstream of the induction means (5) and connected to the extrusion head (1).

## Patentansprüche

1. Anordnung zum induktiven Heizen eines elektrischen Leiters nach dem Extrusionskopf in einem Prozess zur Herstellung von elektrischen Kabeln (8), die eine Isolationsschicht auf dem elektrischen Leiter aufweisen, wobei die Anordnung umfasst:
Eine Splicebox, eine Induktionseinrichtung (5) zum Erzeugen eines magnetischen Feldes und zum Beheizen des Leiters, und eine Führeinrichtung zum Richten des mit der Induktionseinrichtung erzeugten Magnetfelds, **dadurch gekennzeichnet, dass** die Induktionseinrichtung (5) einen ersten unterscheidbaren Teil bildet, und dass die Führeinrichtung (4) der Splicebox bereitgestellt wird, um einen zweiten unterscheidbaren Teil zu bilden, sodass, wenn die Splicebox (3) geschlossen wird, die Führeinrichtung (4) die Induktionseinrichtung (5) umgibt, und wenn die Splicebox (3) geöffnet wird, die Induktionseinrichtung (5) freigelegt wird.

2. Anordnung gemäß Anspruch 1, **dadurch gekennzeichnet, dass** die Induktionseinrichtung (5) eine Spule ist, die um das elektrische Kabel (8) herum angeordnet ist.

3. Anordnung gemäß Anspruch 1 oder 2, **dadurch gekennzeichnet, dass** der erste unterscheidbare Teil weiterhin ein Trageelement (2) zum Tragen der Induktionseinrichtung (5) umfasst.

4. Anordnung gemäß zumindest einem der vorangehenden Ansprüche 1 bis 3, **dadurch gekennzeichnet, dass** der erste unterscheidbare Teil weiterhin elektrische Verbindungen (7) zum Bedienen der Induktionseinrichtung (5) umfasst.

5. Anordnung gemäß zumindest einem der vorangegangenen Ansprüche 1 bis 4, **dadurch gekennzeichnet, dass** die Führeinrichtung (4) Ferritkerne ist, die in der Splicebox (3) vorgesehen sind und die in Induktionseinrichtung (5) umgeben, um das durch die Induktionseinrichtung (5) erzeugte Magnetfeld zu führen, um wiederum die Splicebox vor dem Heizen zu schützen.

6. Anordnung gemäß zumindest einem der vorangegangenen Ansprüche 1 bis 5, **dadurch gekennzeichnet**, das das Trageelement (2) ein Flansch ist, das mit dem Extrusionskopf (1) verbunden ist.

7. Anordnung gemäß zumindest einem vorangegangenen Anspruch 1, **dadurch gekennzeichnet, dass** der erste unterscheidbare Teil mit dem Extrusionskopf (1) verbunden ist und einen Trageflansch (2) mit einer Induktionsspule als Induktionseinrichtung (5), die das elektrische Kabel (8) umgibt, und elektrische Verbindungen (7) zum Bedienen der Induktionseinrichtung (5) umfasst, und dass der zweite unterscheidbare Teil Ferritkerne als Führeinrichtung (4) umfasst, die die induktive Spule umgeben und in einer Splicebox vorgesehen sind, um das über die Induktionseinrichtung (5) erzeugte Magnetfeld zu richten, um die Splicebox vor dem Heizen zu schützen.

8. Anordnung gemäß zumindest einem der vorangegangen Ansprüche 1 bis 7, **dadurch gekennzeichnet, dass** eine Röntgenmesseinrichtung (6) Teil der Splicebox (3) ist.

9. Anordnung gemäß Anspruch 8, **dadurch gekennzeichnet, dass** die Röntgenmesseinrichtung (6) in Flussrichtung nachliegend der Induktionseinrichtung (5) angeordnet ist.

10. Anordnung gemäß Anspruch 8 oder 9, **dadurch gekennzeichnet, dass** die Röntgenmesseinrichtung (6) zwischen jeweiligen Enden der Splicebox (3) angeordnet ist.

11. Anordnung gemäß zumindest einem der vorangegangenen Ansprüche 1 bis 5, **dadurch gekennzeichnet, dass** die Röntgenmesseinrichtung (6) in Flussrichtung aufwärts der Induktionseinrichtung (5) angeordnet ist.

12. Anordnung gemäß Anspruch 11, **dadurch gekennzeichnet, dass** die Röntgenmesseinrichtung (6) entfernbar mit dem Extrusionskopf (1) verbunden ist.

13. Anordnung gemäß Anspruch 11 oder 12, **dadurch gekennzeichnet, dass** das Trageelement (2) ein Flansch ist, der mit der flussabwärts liegenden Seite der Röntgeneinrichtung (6) verbunden ist.

14. Anordnung gemäß zumindest einem der vorangegangenen Ansprüche 10 bis 13, **dadurch gekennzeichnet, dass** die Einrichtung weiterhin eine Trageeinrichtung (9) zum Wegbewegen von dem Extrusionskopf (1) und zum Tragen der Röntgeneinrichtung (6) und der Induktionseinrichtung (5) umfasst, wenn die Splicebox (3) geöffnet wird.

15. Anordnung gemäß Anspruch 14, **dadurch gekennzeichnet, dass** die Trageeinrichtung (9) einen Anschlag (10) zum Begrenzen der Bewegung der Röntgeneinrichtung (6) und der Induktionseinrichtung (5) umfasst, wenn die Splicebox (3) geöffnet wird.

16. Anordnung gemäß Anspruch 14 oder 15, **dadurch gekennzeichnet, dass** die Trageeinrichtung (9) für Stangen ist.

17. Anordnung gemäß zumindest einem der vorangegangenen Ansprüche 4 bis 16, **dadurch gekennzeichnet, dass** die Verbindungen (7) in dem Trageelement (2) vorgesehen sind.

18. Verfahren zum induktiven Heizen eines elektrischen Leiters nach dem Extrusionskopf (1) in einem Prozess zum Herstellen von elektrischen Kabeln, die eine Isolationsschicht aufweisen, die den elektrischen Leiter umgibt, wobei das Verfahren die Schritte umfasst:
- Extrudieren einer Isolationsschicht durch einen Extrusionskopf auf einen elektrischen Leiter, um ein elektrisches Kabel (8) herzustellen; und
- Erzeugen eines magnetischen Feldes durch eine Induktionseinrichtung (5), **dadurch gekennzeichnet, dass** das Verfahren weiterhin ein Schritt umfasst:
- Richten des mit der Induktionseinrichtung erzeugten Magnetfeldes durch eine Führeinrichtung (4), die in einer Splicebox (3) vorgesehen ist, um externe Teile vor einem Heizen zu schützen, sodass, wenn die Splicebox (3) geschlossen wird, die Führeinrichtung die Induktionseinrichtung (5) umgibt.

19. Verfahren gemäß Anspruch 18, **gekennzeichnet durch** Erzeugen des Magnetfeldes mit einer Spule, die um das elektrische Kabel (8) herum angeordnet ist.

20. Verfahren gemäß Anspruch 18 oder 19, **gekennzeichnet durch** Bedienen der Induktionseinrichtung **durch** elektrische Verbindungen.

21. Verfahren gemäß zumindest einem der vorangegangenen Ansprüche 18 bis 20, **gekennzeichnet durch** Verwenden von Ferritkernen, die in der Splicebox vorgesehen sind und die Induktionseinrichtung umgeben, um das **durch** die Induktionseinrichtung (5) erzeugte Magnetfeld zu führen, um wiederum externe Teile vor dem Heizen zu schützen.

22. Verfahren gemäß zumindest einem der vorangegangenen Ansprüche 18 bis 20, **gekennzeichnet durch** Messen der Eigenschaften des Kabels (8) mit einer Röntgeneinrichtung (6), die in Flussrichtung nachliegend der Induktionseinrichtung (5) vorgesehen und in der Splicebox (3) angeordnet ist.

23. Verfahren gemäß zumindest einem der vorangegangenen Ansprüche 18 bis 20, **gekennzeichnet durch** Messen der Eigenschaften des Kabels (8) mit einer Röntgeneinrichtung (6), die in Flussrichtung aufwärts der Induktionseinrichtung (5) vorgesehen und mit dem Extrusionskopf (1) verbunden ist.

## Revendications

1. Agencement pour chauffer par induction un conducteur électrique après la tête d'extrusion dans un procédé de fabrication de câbles électriques (8) comportant une souche d'isolation sur le conducteur électrique, l'agencement comprenant une boîte d'épissurage, des moyens d'induction (5) pour générer un champ magnétique et chauffer le conducteur et des moyens de guidage pour diriger le champ magnétique créé avec les moyens d'induction, **caractérisé en ce que** les moyens d'induction (5) forment une première partie distinctive et les moyens de guidage (4) sont placés sur la boîte d'épissurage pour former une seconde partie distinctive de telle manière que quand la boîte d'épissurage (3) est fermée les moyens de guidage (4) entourent les moyens d'induction (5) et quand la boîte d'épissurage (3) est ouverte les moyens d'induction (5) sont exposés.

2. Agencement selon la revendication 1, **caractérisé en ce que** des moyens d'induction (5) sont une bobine agencée autour du câble électrique (8).

3. Agencement selon la revendication 1 ou 2, **caractérisé en ce que** la première partie distinctive comprend en outre un support (2) pour supporter les moyens d'induction (5).

4. Agencement selon l'une quelconque des revendications 1-3, **caractérisé en ce que** la première partie distinctive comprend en outre des connexions électriques (7) pour faire fonctionner les moyens d'induction (5).

5. Agencement selon l'une quelconque des revendications 1-4, **caractérisé en ce que** les moyens de guidage (4) sont des noyaux en ferrite placés dans la boîte d'épissurage (3) et entourant les moyens d'induction (5) pour guider le champ magnétique créé par les moyens d'induction (5) pour protéger la boîte d'épissurage du chauffage.

6. Agencement selon l'une quelconque des revendications 1-5, **caractérisé en ce que** le support (2) est un rebord connecté à la tête d'extrusion (1).

7. Agencement selon une quelconque revendication 1, **caractérisé en ce que** la première partie distinctive est connectée à la tête d'extrusion (1) et comprend un rebord de support (2) avec une bobine d'induction comme moyens d'induction (5) entourant le câble électrique (8) et des connexions électriques (7) pour faire fonctionner les moyens d'induction (5), et **en ce qu'**une seconde partie distinctive comprend des noyaux de ferrite comme moyens de guidage (4) entourant la bobine d'induction et placés dans une boîte d'épissurage pour diriger le champ magnétique créé avec les moyens d'induction (5) pour protéger la boîte d'épissurage du chauffage.

8. Agencement selon l'une quelconque des revendications 1-7, **caractérisé en ce qu'**un dispositif de mesure à rayons X (6) fait partie de la boîte d'épissurage (3).

9. Agencement selon la revendication 8, **caractérisé en ce que** le dispositif de mesure à rayons X (6) est agencé en aval des moyens d'induction (5).

10. Agencement selon les revendications 8 ou 9, **caractérisé en ce que** le dispositif de mesure à rayons X (6) est agencé entre les extrémités respectives de la boîte d'épissurage (3).

11. Agencement selon l'une quelconque des revendications 1-5, **caractérisé en ce que** le dispositif de mesure à rayons X (6) est agencé en amont des moyens d'induction (5).

12. Agencement selon la revendication 11, **caractérisé en ce que** le dispositif de mesure à rayons X (6) est connecté de manière amovible à la tête d'extrusion (1).

13. Agencement selon les revendications 11 ou 12, **caractérisé en ce que** le support (2) est un rebord connecté au côté aval du dispositif de mesure à rayons X (6).

14. Agencement selon l'une quelconque des revendications 10-13, **caractérisé en ce que** l'agencement comprend en outre des moyens de support (9) pour éloigner de la tête d'extrusion (1) et supporter le dispositif de mesure à rayons X (6) et les moyens d'induction (5) quand la boîte d'épissurage (3) est ouverte.

15. Agencement selon la revendication 14, **caractérisé en ce que** les moyens de support (9) comprennent un élément d'arrêt (10) pour limiter le mouvement du dispositif de mesure à rayons X (6) et des moyens d'induction (5) quand la boîte d'épissurage (3) est ouverte.

16. Agencement selon la revendication 14 ou 15, **caractérisé en ce que** les moyens de support (9) sont des barres de guidage.

17. Agencement selon l'une quelconque des revendications 4-16, **caractérisé en ce que** des connexions (7) sont placées dans le support (2).

18. Procédé pour chauffer par induction un conducteur électrique après la tête d'extrusion (1) dans un procédé de fabrication de câbles électriques (8) comportant une souche d'isolation entourant le conducteur électrique, le procédé comprenant les étapes consistant à :
extruder une couche d'isolation à travers une tête d'extrusion sur un conducteur électrique afin de produire un câble électrique (8) ; et
créer un champ magnétique par des moyens d'induction (5),
**caractérisé en ce que** le procédé comprend en outre une étape consistant à :
diriger le champ magnétique créé avec les moyens d'induction par des moyens de guidage (4) placés dans une boîte d'épissurage (3) afin de protéger des parties extérieures du chauffage de telle manière que quand la boîte d'épissurage (3) est fermée les moyens de guidage entourent les moyens d'induction (5).

19. Procédé selon la revendication 18, **caractérisé par** le fait de créer le champ magnétique par une bobine agencée autour du câble électrique (8).

20. Procédé selon la revendication 18 ou 19, **caractérisé par** le fait de faire fonctionner les moyens d'induction par des connexions électriques.

21. Procédé selon l'une quelconque des revendications 18-20, **caractérisé par** le fait d'utiliser des noyaux en ferrite placés dans la boîte d'épissurage et entourant les moyens d'induction pour guider le champ magnétique créé par les moyens d'induction (5) pour protéger des parties extérieures du chauffage.

22. Procédé selon l'une quelconque des revendications 18-20, **caractérisé par** le fait de mesurer les propriétés du câble (8) avec un dispositif de mesure à rayons X (6) placé en aval des moyens d'induction (5) et agencé dans la boîte d'épissurage (3).

23. Procédé selon l'une quelconque des revendications 18-20, **caractérisé par** le fait de mesurer les propriétés du câble (8) avec un dispositif de mesure à rayons X (6) placé en amont des moyens d'induction (5) et connecté à la tête d'extrusion (1).
